(19) Europäisches Patentamt
European Patent Office
Office européen des brevets

(11) **EP 2 434 702 B1**

(12) **EUROPEAN PATENT SPECIFICATION**

(45) Date of publication and mention
of the grant of the patent:
**12.06.2013 Bulletin 2013/24**

(51) Int Cl.:
***H04L 12/801*** *(2013.01)*

(21) Application number: **10306046.3**

(22) Date of filing: **28.09.2010**

(54) **Scheduling method for data streaming in a telecommunication network infrastructure**

Planungsverfahren für Datenstreaming in einer Telekommunikationsnetzwerkinfrastruktur

Procédé de programmation de flux de données dans une infrastructure de réseau de télécommunications

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.03.2012 Bulletin 2012/13**

(73) Proprietor: **Alcatel Lucent
75007 Paris (FR)**

(72) Inventors:
• **Changuel, Nesrine
91620 Nozay (FR)**
• **Sayadi, Bessem
91620 Nozay (FR)**
• **Kieffer, Michel
92340 Bourg-La-Reine (FR)**

(74) Representative: **Therias, Philippe
Alcatel-Lucent International
IP&S
32, avenue de Kléber
92700 Colombes (FR)**

(56) References cited:
**EP-A1- 1 619 839     US-A1- 2003 031 210**

**Description**

An aspect of the invention relates to a scheduling method for data streaming in a telecommunication network infrastructure.

Such a method find a particular, though non exclusive, application to the data streaming in cellular radio-communication networks, for example 4th generation network like LTE (Long Term Evolution) or WiMAX (Worldwide Interoperability for Microwave Access).

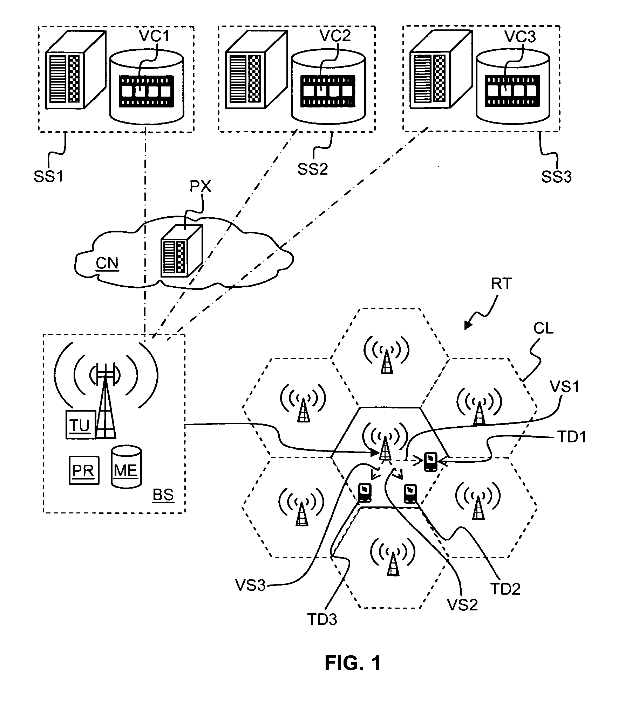

Figure 1 is a block diagram schematically illustrating a cellular radio-communication network architecture for providing video streams VS1, VS2, VS3 to users of mobile radio-communication terminals TD1, TD2, TD3. This Figure is very diagrammatic in the sense that all the entities that may be present in a communication network are not represented. Figure 1 shows a portion of radio coverage area of a cellular radio-communication network RT. The illustrated portion comprises a plurality of cells CL. Each cell CL is related to at least one base station BS. A base station BS may comprise a processing arrangement PR, a memory ME, and a transmitting unit TU. The base station BS is coupled to various video streaming servers SS1, SS2, SS3 through the core network CN. The video streaming servers may be for example television company server (TF1™, CNN™, etc...) or video sharing server (YouTube™, DailyMotion™, etc...), etc.... The base station BS may be able to provide, substantially concomitantly, video streams VS1, VS2, VS3 to the users of mobile radio-communication terminal TD1, TD2, TD3 that have requested video contents VC1, VC2, VC3 from the video streaming servers SS1, SS2, SS3, respectively.

A satisfactory transmission of video streams in the cellular radio-communication network requires minimizing the video distortion and providing a continuous play-out to the users of mobile radio-communication terminals.

The video distortion depends on the bit-rate available for encoding the video content on which the video stream is based, and on the quality of the radio channel used to transmit the video stream. The losses are mainly due to the transmission errors, the moving speed of the mobile radio-communication terminal, the transmitted power, etc.... In order to reduce the video distortion and also due to delay constraints of a streaming video traffic, a transmitter of a base station defines a transmission/encoding rate and a scheduling time for each video packet/sequence to be transmitted to a mobile radio-communication terminal.

At the mobile radio-communication terminal, a receiving unit receives the incoming video packets/sequences and stored them in a video decoder buffer. The video decoder reads the video packets/sequences from the video decoder buffer and then displays a video corresponding to the video content. The continuous play-out means that once the mobile radio-communication terminal begins displaying the received video, the displaying process continues uninterrupted, without stalling. If a video packet sequence does not arrive on time to be displayed, then the corresponding portion of the video content is considered lost. In order to ensure the continuous play-out, a defined playback margin corresponding to sufficient video frames to be stored in the video decoder buffer before the displaying process starts has to be considered. This enables reducing the impact on the video quality of delay jitter, losses, and cellular radio-communication network variations.

Achieving a satisfactory transmission of video streams in a cellular radio-communication network providing minimum video distortion and a continuous play-out to each user of mobile radio-communication terminal is difficult to achieve when a plurality of user of mobile radio-communication terminal are requesting substantially simultaneously a plurality of video streams from different video content providers while being in the same cell.

The users of mobile radio-communication terminals TD1, TD2, TD3 are served by the base station BS according to criteria related to the channel quality, the fullness of the queue, and the flow priority as defined by the scheduling policies used at the MAC layer (Media or Medium Access Control data communication protocol sub-layer). A MAC scheduler is responsible for allocating the radio air interface resources to be used, in particular it co-ordinates the transmission of video streams VS1, VS2, VS3 to the users of mobile radio-communication terminal TD1, TD2, TD3. As an example, in LTE type communication network, there are no dedicated channels and no circuit switched traffic. All the traffic is packet switched and all the channel resources are shared among all users of mobile radio-communication terminals in a cell. Thus, the MAC scheduler, and in particular the scheduling algorithm, is critical to guarantee performance levels and QoS (Quality of Service) requirements.

A first scheduler known as max rate or max C/I scheduler aims at allocating radio air interface resources to users of mobile radio-communication terminal with instantaneous best radio conditions. It exploits the rapid radio link quality variation or fast fading. However, this scheduler is not satisfactorily when not all users are experiencing similar channel conditions and when there is a rapid variation in radio link quality. As a consequence, users of mobile radio-communication terminals that are constantly in bad radio conditions might be served with a sensible delay or might not be scheduled at all. Such a situation could generate a significant timeout at both RLC (Radio Link Control Layer) and application level leading to an unacceptable video distortion.

A second scheduler known as round robin scheduler aims at fairly sharing the access to radio air interface resources over time between users of mobile radio-communication terminal. It does not take into account the instantaneous radio link conditions. In this case, the user throughput highly depends on the granting capacity versus the user cell load. The higher the granting capacity and air interface bandwidth, the lower the latency. However, this scheduler is not satisfactorily because it leads to lowering the performance in terms of capacity.

A third scheduler known as fair scheduler aims at fairly sharing the cell throughput between users of mobile radio-communication terminal regardless of the data flow priorities and radio conditions. However, this scheduler is not satisfactorily because any user in bad radio conditions consumes a significant amount of air interface resources, thus decreasing the cell throughput, and also has a low spectral efficiency.

A fourth scheduler known as proportional fair scheduler aims at sharing the cell throughput proportionally to data flow priorities and as a function of the radio conditions, for example the downlink Channel Quality Indicator CQI, or the uplink SNR (Signal to Noise Ratio) reported by the mobile radio-communication terminals of the users. However, though this scheduler allows a fair usage of the radio air interface, it is not satisfactorily because it is favoring the users of mobile radio-communication terminal having the best radio air interface conditions, and does not provide low video distortion and a continuous play-out to the users of mobile radio-communication terminal having poor radio air interface conditions.

US 2003/031210 describes a packet data communication system that includes a mobile station having a jitter buffer and a wireless infrastructure having a base site serving the mobile station that controls a size or depth of the jitter buffer. The size of depth is controlled based on a number of retransmissions of erroneously received data employed by the system, a radio frequency load of the base site, and a round trip time period for acknowledgments and corresponding retransmissions. The jitter buffer size may be further controlled by use of a supplemental channel to expedite the transmission of data and thereby fill up the jitter buffer more quickly and by reducing the waiting period for retransmission of the acknowledgments, thereby reducing the round trip time period.

It is an object of the invention to propose a scheduling method that overcomes one or more of the limitations of the existing scheduling method.

The invention is considering allocating the resources necessary to a satisfactory transmission of video streams by controlling the video source encoder.

According to one aspect, there is provided a scheduling method for data streaming in a telecommunication network infrastructure wherein a plurality of telecommunication terminal in a same coverage zone are served by at least one serving node, each telecommunication terminal requesting a specific data content, the method comprising the following steps:

- estimating a capacity of the at least one serving node with respect to each telecommunication terminal,

- estimating a state of a plurality of data transmission buffer,

- calculating at least one parameter based on said estimated capacity and said data transmission buffer state that minimize a data distortion of each data stream received by each telecommunication terminal and maintain a number of data frames stored in each data transmission buffer at a reference number of frames,

- transcoding or filtering each data content at an output rate based on said parameter, and storing each transcoded or filtered data content as data frames into each data transmission buffer,

- allocating an amount of bandwidth to each telecommunication terminal based on said parameter, and

- scheduling and transmitting each data frames as data streams to each telecommunication terminal.

The at least one parameter may be a transcoding parameter or a filtering parameter, and a bandwidth partition.

The method may further comprise intercepting, before being transmitted by the serving node, the plurality of data content requested by the plurality of telecommunication terminal from a plurality of data streaming server.

The method may further comprise the following steps:

- stopping the transmission of the data stream to the telecommunication terminal and temporarily not serving the corresponding telecommunication terminal when the distortion associated to said data stream is above a minimum distortion threshold, and

- re-calculating the transcoding or filtering parameter and the bandwidth partition excluding said not served telecommunication terminal.

The calculation of the quantization parameter and the bandwidth partition consist in solving a constrained optimization problem where a criterion dependant on a mean of the distortion is minimized based on the argument of the minimum:

$$\underset{\left(QP_{n,j}; \alpha_{n,j}; n = 1 \ldots N\right)}{\text{argmin}} \sum_{n=1}^{N} D_{n,j}\left(QP_{n,j}\right)$$

under the constraint that the minimum corresponds to a distortion $D_{n,j}$ at time j below the minimum distortion threshold Do on each data stream:

$$D_{n,j}\left(QP_{n,j}\right) \leq D_S$$

with $QP_{n,j}$ the transcoding or filtering parameter at time j, and $\alpha_{n,j}$ the bandwidth partition at time j.

The method may further comprise adjusting the transcoding or filtering parameter and the bandwidth partition periodically according to a defined period of regulation.

A transcoding parameter may be used and a transcoding operation may be implemented when the data content is a video content encoded according to a simple layer standard (H263, H264/AVC, MPEG2/4), and a filtering parameter may be used and a transcoding operation may be implemented when the data content is a video content encoded according to a scalable video coding standard (H264 SVC).

The determination of the capacity may be based on a condition of each user-serving node link through which the data stream is transmitted to the telecommunication terminal.

The capacity may be determined by using an indicator correlated to the capacity and provided by the serving node or each telecommunication terminal.

The method may further comprise estimating the distortion associated to said data stream by measuring a peak signal to noise ratio (PSNR).

According to another aspect, there is provided a scheduling device for data streaming in a telecommunication network infrastructure wherein a plurality of telecommunication terminal in a same coverage zone are served by at least one serving node, each telecommunication terminal requesting a specific data content, wherein the scheduling device comprises:

- a controlling arrangement calculating at least one parameter based on an estimated capacity of the at least one serving node with respect to each telecommunication terminal and a state of a plurality of data transmission buffer, the at least one parameter minimizing a distortion of each data stream received by each telecommunication terminal and maintaining a number of data frames stored in each data transmission buffer at a reference number of frames,

- a data transcoder transcoding or filtering each data content as data frames at a transcoder output rate based on said parameter, each transcoded data content being stored as data frames into each data transmission buffer,

- a scheduler allocating an amount of bandwidth to each telecommunication terminal based on said parameter, and scheduling the transmission of each data frames as data streams to each telecommunication terminal.

According to a further aspect, there is provided an intelligent node of a cellular radio-communication network infrastructure wherein the serving node is a base station, and the telecommunication terminal is a mobile radio-communication terminal, the intelligent node comprising a scheduling device according to the invention.

According to still a further aspect, there is provided a proxy server of a cellular radio-communication network infrastructure wherein the serving node is a base station, and the telecommunication terminal is a mobile radio-communication terminal, the proxy server comprising a scheduling device according to the invention.

In contradistinction with known MAC scheduler that ensures the bandwidth fairness between users only at the MAC layer, the scheduling scheme of the invention is optimized in dependence of the video source encoder (the transcoder).

The invention increases the spectral efficiency (namely the information rate that can be transmitted over a given bandwidth), ensures a playback margin fairness among the users of mobile radio-communication terminals with a minimum video quality. It may further increase the income of the telecommunication operator that may money the improvement in quality.

Other advantages will become apparent from the hereinafter description of the invention.

The present invention is illustrated by way of examples and not limited to the accompanying drawings, in which like references indicate similar elements:

- Figure 1 is a block diagram schematically illustrating a cellular radio-communication network architecture for providing video streams to users of mobile radio-communication terminals;

- Figure 2 is a block diagram schematically illustrating an embodiment of the scheduling method;

- Figure 3 is a block diagram schematically illustrating a mobile radio-communication terminal;

- Figures 4 to 7 show the capacity, the bandwidth repartition, the transmission rate, the peak signal to noise ratio as experimental results of the scheduling method in an example without disconnection where three mobile radio-communication terminals receive substantially concomitantly different video streams, respectively; and

- Figures 8 to 11 show the capacity, the bandwidth repartition, the transmission rate, the peak signal to noise ratio as experimental results of the scheduling method in an example with disconnection where three mobile radio-communication terminals receive substantially concomitantly different video streams, respectively.

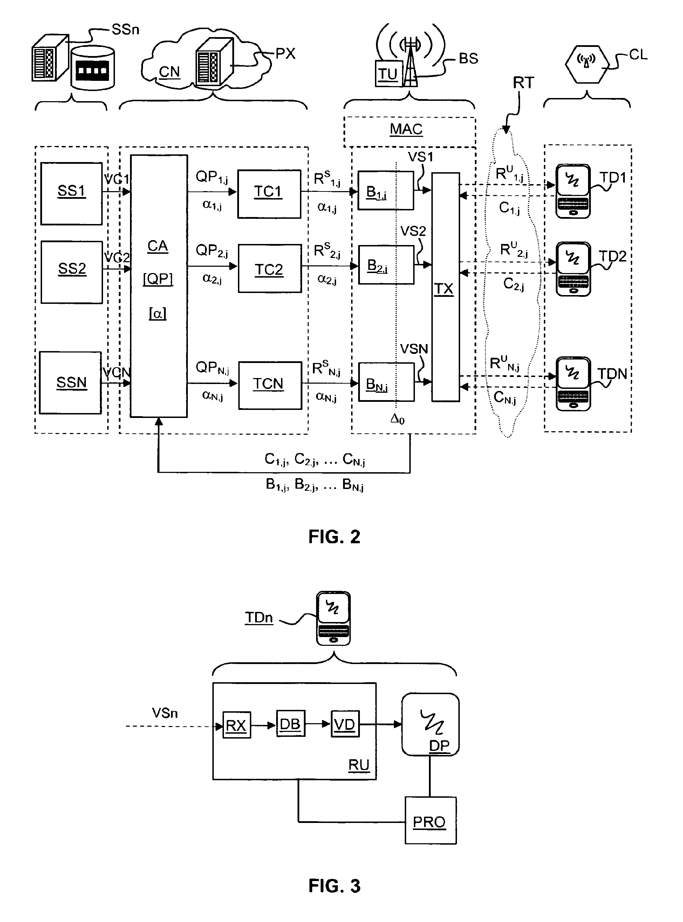

Figure 2 is a block diagram schematically illustrating an embodiment of the scheduling method. This Figure is very diagrammatic and partial in the sense that only the entities of the cellular radio-communication network architecture for providing video streams to the users of mobile radio-communication terminals TD1, TD2 ... TDN that may be involved in the scheduling method of the invention are represented.

In a cell CL, a plurality of user N of mobile radio-communication terminal TD1, TD2 ...TDN requests video contents VC1, VC2 ...VCN from the video streaming servers SS1, SS2 ...SSN, respectively. More precisely, each user requests a specific video content from a specific video server. Further, each specific video server does not necessarily belong to the same video service platform. The mobile radio-communication terminals TD1, TD2 ...TDN are in the same cell CL served by the base station BS. The base station BS allocates the corresponding resources in order to satisfy said requests, namely providing a unicast streaming video traffic. The base station BS is coupled to the video streaming servers SS1, SS2 ...SSN through the core network CN. An intelligent node of the cellular radio-communication network infrastructure, for example a proxy server PX, intercepts the requested video contents VC1, VC2 ...VCN before said video contents are processed for transmission by the base station BS. The proxy server PX comprises a controlling arrangement CA and video transcoders TC1, TC2 ...TCN. The video transcoders TC1, TC2 ...TCN transcode the video contents VC1, VC2 ...VCN according to quantization parameters QP and bandwidth partition $\alpha$ provided by the controlling arrangement pursuant to the method that will be explained in details hereinafter. The transcoded video contents are provided to the transmitting unit TU of the base station BS. The transmitting unit TU of the base station BS comprises video transmission buffers $B_1$, $B_2$ ...$B_N$ and a transmitter TX (the indice j used in the drawings corresponds to the state of the buffer at time j). The video transmission buffers $B_1$, $B_2$ ...$B_N$ stores the transcoded video contents. Then, the corresponding video streams VS1, VS2 ... VSN are transmitted, substantially concomitantly, by the transmitter TX of the base station BS to the requesting mobile radio-communication terminals TD1, TD2 ... TDN, respectively. The corresponding video streams VS1, VS2 ... VSN forms N-unicast video streams that are transmitted over radio/wireless shared channel(s) (user-base station link) allocated by the base station BS.

Though, the proxy server comprising the controlling arrangement and the transcoder, and the base station are presented as distinct entities, these entities may be regrouped in a unique entity, for example an e-NodeB of an LTE network.

Figure 3 is a block diagram schematically and partially illustrating any of the mobile radio-communication terminals TD1, TD2 ...TDN referred here as TDn. The mobile radio-communication terminal comprises a receiving unit RU coupled to a display DP under the control of a processing arrangement PRO. The receiving unit RU comprises a receiver RX, a video decoder buffer DB and a video decoder VD. The receiver RX receives the incoming video packets/sequences of the video stream VSn and stored them in the video decoder buffer DB. The video decoder VD reads the video packets/sequences stored in the video decoder buffer DB. A video corresponding to the video content is then displayed to the user by means of the display DP.

The scheduling method of the invention is based on a joint video source control and video transmission buffers management for the N-unicast video streams that are transmitted over radio/wireless shared channel(s). Thus, all the N mobile radio-communication terminals TD1, TD2 ...TDN in the same cell receive video traffics that are optimized jointly. The scheduling method of the invention considers, firstly, minimizing the video distortion of each video received by each mobile radio-communication terminal; secondly, ensuring a playback margin fairness between the N users in the cell; and thirdly, the fullness of the video transmission buffer at a determined frame level.

All the video contents VC1, VC2 ...VCN addressed to the N-users are intercepted in the intelligent node of the cellular radio-communication network infrastructure, for example the proxy server PX.

The MAC scheduler determines the capacity C (in bit/s/Hz) of each link between user n of a radio-communication terminal TDn and the base station BS. This will be referred as the capacity of the user-base station link. At time j, the capacity of the user-base station link n is denoted by $C_{n,j}$ with n=1...N. The capacity determination is based on the radio condition of each user-base station link. It may be determined according to any indicator correlated to the capacity. For example, the capacity can be determined by using the channel quality indicator, or by the base station or by the radio-communication terminal.

Given the distortion-rate functions of all N video sources (the N transcoders) and the available bandwidth, the optimum rate and the optimum bandwidth are allocated according to the following optimization scheme. The distortion-rate function (D=f(R) )) is used to optimize the amount of distortion, namely the loss of video quality, against the encoding rate, namely the amount of data required to encode the video.

The total bandwidth $W_j$ (in Hz) allocated to the N radio-communication terminal users by the MAC scheduler is given by:

$$\sum_{n=1}^{N} W_{nj} = W_j \tag{1}$$

where $W_{n,j}$ with n=1...N represents the amount of the bandwidth allocated to the radio-communication terminal user n at time j.

If a cell has only N-unicast radio-communication terminal users connected, the value of the total bandwidth $W_j$ is equal to the available bandwidth of the cell, for example 5 MHz, 10 MHz or 20 MHz for a network like LTE.

The distortion-rate function of the transcoder is assumed to be a function of some encoding parameters, for example the quantization parameter QP.

In the intelligent node, for example in the proxy server, a transcoding operation on the video content is performed in case of a video content encoded with H263, H264/AVC or MPEG2/4 standard. In case of a video content encoded with H264 SVC (Scalable Video Coding) standard, the transcoding operation may be replaced by a mere layer filtering mechanism. The transcoding or filtering operation enables controlling the user-base station link transmission rate $R^u_{nj}$ for user n at time j:

$$R^u_{nj} = W_{nj} C_{nj} \tag{2}$$

The scheduling method of the invention seeks to serve all the N radio-communication terminal users with a distortion below a minimum distortion threshold.

If it is possible to maintain the distortion below the minimum distortion threshold, then the bandwidth $W_{n,j}$ with n=1...N is allocated to each radio-communication terminal user n at time j, under the constraint that all the video transmission buffers $B_{1,j}$, $B_{2,j}$ ...$B_{N,j}$ store the same number of frames denoted by $\Delta_0$. This requires solving the optimization problem that will be detailed hereinafter.

If it is not possible to maintain the distortion below the minimum distortion threshold, than the radio-communication terminal user having bad channel condition is temporarily not served. Then, the hereinbefore mentioned step (i.e. bandwidth allocation and optimization problem solving) is performed on the rest of the radio-communication terminal users. Practically, the user encountering bad channel condition continues its playback (based on the video already stored in the video decoder buffer DB). For this reason, though not being served temporarily, this does not impact the continuous play-out and the video quality for said user.

The optimization problem will now be explained. The terminology "optimization problem" as commonly used in mathematics means the problem of finding the best solution from a plurality of, eventually all feasible solutions.

The video transmission buffer state related to the video stream VSn for the radio-communication terminal user n at time j is denoted by $B_{n,j}$. The fullness of the video transmission buffer across the time is determined by the following equation:

$$B_{n,j+1} = B_{n,j} - W_{n,j}C_{n,j}.T + R^s_{n,j}.T \qquad (3)$$

where:

T is the period of regulation (in second);

$R^S_{n,j}$ is the transcoder rate at the output of the transcoder TCn (in bit/s);

$D_{n,j}$ is the distortion at the output of the transcoder TCn (without unit); and with n=1...N.

The quantity $W_{n,j}C_{n,j}$ expresses the amount of bits extracted from the video transmission buffer. It depends mainly on the value of the allocated bandwidth $W_{n,j}$ and the capacity $C_{n,j}$ of the user-base station link at time j. The value of the allocated bandwidth $W_{n,j}$ is delivered by the controlling arrangement CA as a result of the optimization problem. At the same time, the controlling arrangement CA regulates the transcoder rate $R^S_{nj}T$ in order to deliver the right amount of bits which will be stored in the video transmission buffer at time j in order to guarantee that a reference number of frames $\Delta_0$ is stored in each buffer. The reference number of frames $A_0$ is expressed in frame.

The buffering delay $\Delta_{n,j}$, namely the delay between encoding a j-th frame of the n-th video stream and its scheduling time (in frame) can be expressed by:

$$\Delta_{nj} = \delta_{nj} + \varepsilon_{nj} \qquad (4)$$

with $\delta_{nj}$ is the integer number of buffered frame and $\varepsilon_{nj}$ is the percentage of frame not fully sent. The average deviation of each video transmission buffers from the reference number of frames $\Delta_0$ is:

$$\overline{\Delta}_j = \frac{1}{N} \sum_{n=1}^{N} \left( \Delta_{n,j} - \Delta_0 \right) \quad (5)$$

The average deviation is fed back to the controlling arrangement CA in order to update the value of the transcoder rate constraint for the j+1-th video packet/sequence as follows:

$$\sum_{n=1}^{N} R^s_{n,j} = \left( \sum_{n=1}^{N} R^s_{n,j-1} \right) \left( 1 - f\left( \overline{\Delta}_j \right) \right) (6)$$

where $f(\overline{\Delta}_j)$ is a function belonging to the interval ]-1,+1[. The function $f()$ could be for example arctan(.). The function $f()$ is in charge of increasing or decreasing the rate constraint value according to the following. If the number of frames stored in the video transmission buffers is in average higher than the reference number of frames $\Delta_0$, then the transcoder rate of the next video packet/sequence may be reduced. If the number of frames stored in the video transmission buffers is in average lower than the reference number of frames $\Delta_0$, then the transcoder rate may be increased.

Thus, the playback margin (linked to the video transmission buffers), the bandwidth and the transcoders parameters are regulated in a closed loop.

The distortion $D_{n,j}$ and the transcoder rate $R^S_{n,j}$ can be tuned by several encoding parameters at the transcoder level. An important parameter that may be used is the average quantization parameter $QP_{n,j}$. The average quantization parameter $QP_{n,j}$ is usually denoted QP in the ITU, H.264 standard (Advanced video coding for generic audiovisual services, Nov. 2007). Assuming that a rate/distortion optimization is performed for the encoding of each frame, $D_{n,j}$ and $R_{n,j}$ may be represented as two functions of $QP_{n,j}$ only.

As an example, the distortion $D_{n,j}$ and the transcoder rate $R^S_{n,j}$ may be dependent on the quantization parameter $QP_{n,j}$, as follows:

$$D_{n,j} = a_{D_{n,j}} \exp\left(b_{D_{n,j}} QP_{n,j}\right) \qquad (7)$$

and
[0071]

$$R^S_{n,j} = a_{R^S_{n,j}} \exp\left(-b_{R^S_{n,j}} QP_{n,j}\right) \qquad (8)$$

In this context, the optimization problem could be expressed as indicated hereinafter. The vectors of quantization parameters ($QP_{1,j}$, $QP_{2,j}$... $QP_{N,j}$) and the bandwidth partition $\alpha_n$=1...N, j may be evaluated by solving the following constrained optimization problem based on the argument of the minimum, that is to say, the set of points of the given argument for which the value of the given expression attains its minimum value:
$$\operatorname*{argmin}_{(QP_{n,j}; \alpha_{n,j}; n = 1...N)} \sum_{n=1}^{N} D_{n,j}(QP_{n,j}) \qquad (9)$$

under the constraint that said minimum value is below a minimum distortion Do on each video stream:
$$D_{n,j}(QP_{n,j}) \le D_o \qquad (10)$$

and a distortion fairness constraint requiring that all video is encoded with substantially a comparable quality
$$\left| D_{n,j}(QP_{n,j}) - \frac{\sum_{n=1}^{N} D_{n,j}(QP_{n,j})}{N} \right| \le D_f \qquad (11)$$

where $D_f$ is the maximum tolerated distortion deviation between multiplexed video at time j.
and a delay fairness constraint requiring that the buffering delay should be substantially comparable for all videos:
$$\left| \Delta_{n,j+1} - \frac{\sum_{n=1}^{N} \Delta_{n,j+1}}{N} \right| \le \Delta_f \qquad (12)$$

where $\Delta_f$ is the maximum tolerated delay difference between multiplexed videos at time j.
$\Delta_{n,j+1}$ is the playback margin at instant (j+1). It determined as the following:
$$\Delta_{n,j+1} = \Delta_{n,j} + 1 - \frac{\alpha_{n,j} C_{n,j} W_j}{\overline{R}^s_{n,j}} \qquad (13)$$

$\overline{R}^s_{n,j}$ is the approximated average rate to be sent next time and it is expressed by

$$\overline{R}^s_{n,j} = \frac{1}{2 + \varepsilon_{n,j}} \left( \varepsilon_{n,j} R^s_{n,j-\delta_{n,j}-1} + R^s_{n,j-\delta_{n,j}} + R^s_{n,j-\delta_{n,j}+1} \right) \qquad (14)$$

The maximum averaged buffering delays fairness: the average value of the buffering delay should be upper-bounded by the maximum tolerated delay noted $\Delta_{max}$:
$$\frac{\sum_{n=1}^{N} \Delta_{n,j+1}}{N} \leq \Delta_{max} \qquad (15)$$

The rate constraint to be applied by the controlling arrangement on the transcoder has been given in equation (6).
$$\sum_{n=1}^{N} \alpha_{n,j} = 1 \qquad (16)$$

and $0 \leq \alpha_{n,j} \leq 1$ with n = 1...N $\qquad (17)$

The bandwidth allocated to the radio-communication terminal n at time j is:
$$W_{n,j} = \alpha_{n,j} \times W_j \qquad (18)$$

where $W_j$ is the total available bandwidth at time j.

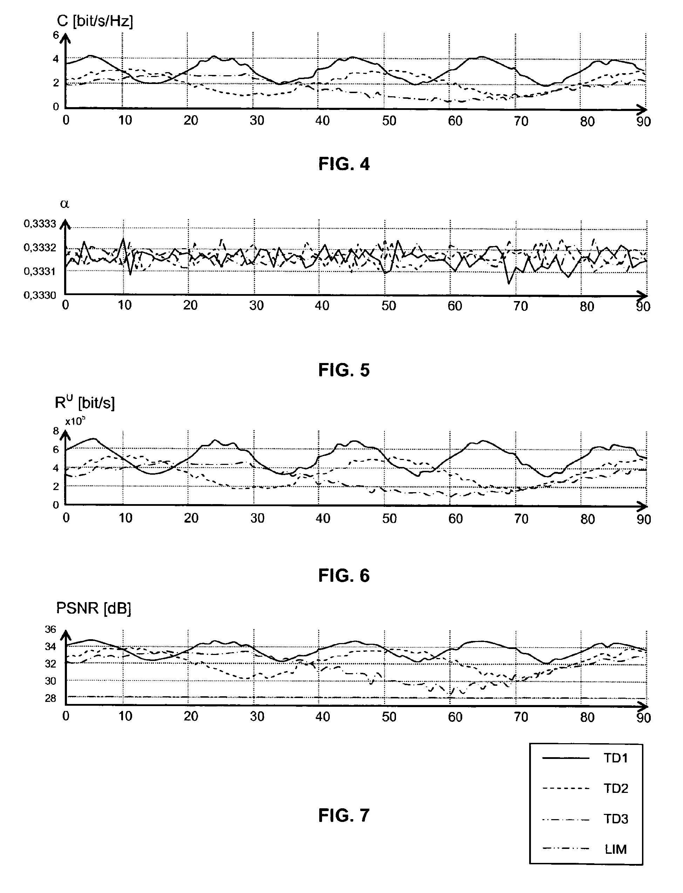

Figures 4 to 11 show the experimental results of the scheduling method in an example where three mobile radio-communication terminals TD1, TD2 and TD3 request substantially concomitantly three different video streams (namely N=3 in the above equations). The capacities C are generated randomly and differently for each mobile radio-communication terminal in order to represent the random behavior of the radio user-base station link for each radio-communication terminal user as well as the random mobility of each radio-communication terminal user in the cell. The hereinbefore described optimization problem is performed at each frame level. The optimal quantization parameters and the optimal bandwidth partition are selected for each video stream at each time.

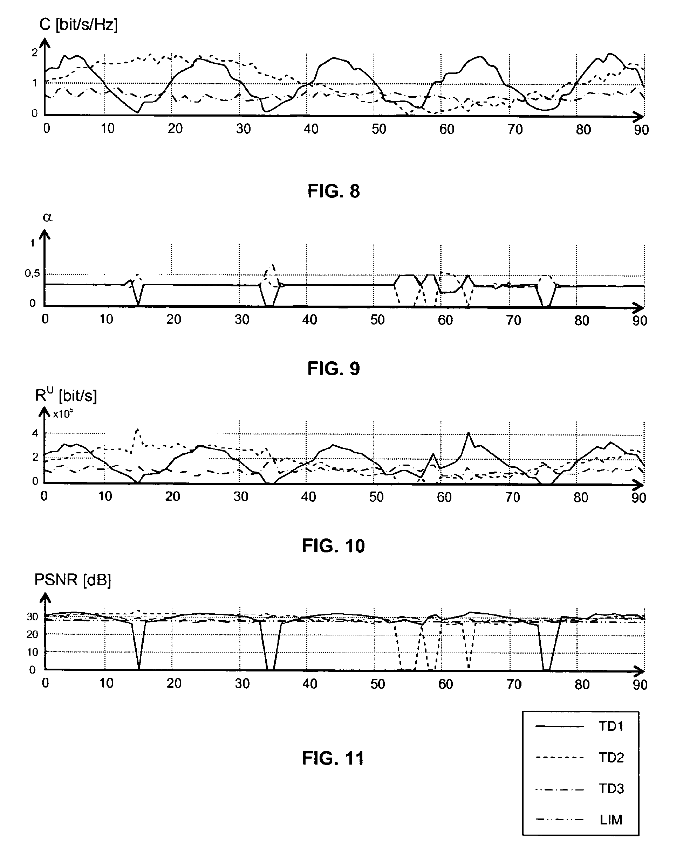

Figures 4 and 8 show the capacity C (expressed in bit/s/Hz) for each of the three radio user-base station links over time.
Figures 5 and 9 show the bandwidth repartition $\alpha_n$=1...N, j among the three radio-communication terminal users.
Figures 6 and 10 show the transmission rate (expressed in bit/s/Hz) at the output of the three transcoders:

$R^S$n=1,2 ... N, j, resulting from the chosen QP$_n$=1,2...N, j.

Figures 7 and 11 show the peak signal to noise ratio PSNR (expressed in dB) which is an indicator of the video quality at the output of the three transcoders. The peak signal to noise ratio PSNR is linked to the distortion by the formulae $10.\log_{10}(255^2/D_n$=1,2...N, j), resulting from the chosen quantization parameter QP$_n$=1,2...N, j. The limit LIM corresponds to the minimum distortion Do expressed in the "log domain" as PSNR, namely $10.\log_{10}(255^2/D_0)$. Others indicators of the video quality can be used to measure the distortion of the video streams.

It is to be noted that with the scheduling method of the invention, the bandwidth is fairly distributed among the three mobile radio-communication terminals TD1, TD2 and TD3 according to their capacities, transcoder rates, the video quality constraint, and the fullness of all the video transmission buffers.

Figures 8 to 11 further illustrate that, when one of the mobile radio-communication terminals cannot ensure the minimum quality constraint, said mobile radio-communication terminal is disconnected. As a consequence, the bandwidth is liberated to the other users until the improvement of the capacity related to said disconnected mobile radio-communication terminal.

With the invention, in the multi-streaming servers / multi-users context, it is possible to maintain the playback buffer occupancy around $\Delta_0$ by adjusting the transcoder and channel rates such that the likelihood of playback-buffer starvation is very small. Thus, a sufficient video frames can be stored in the video decoder buffer before the displaying process starts so as to ensure the continuous play-out to the user of the mobile radio-communication terminal.

The drawings and their description hereinbefore illustrate rather than limit the invention.

Although a drawing shows different functional entities as different blocks, this by no means excludes implementations in which a single entity carries out several functions, or in which several entities carry out a single function. In this respect, the drawings are very diagrammatic. The functions of the various elements shown in the Figures, including any functional blocks labeled as "processors" or "processing arrangement", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "processing arrangement" or "controller" or or "controlling arrangement" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention.

The method finds a particular application to the data streaming in wireless network, for example cellular radio-communication networks like the 4th generation network like LTE (Long Term Evolution) or WiMAX (Worldwide Interoperability for Microwave Access). However, it should be appreciated by those skilled in the art that the method of the invention can be also applied to other kind of telecommunication network, namely fixed line network (known as the public switched telephone network or PSTN) or even any private network.

Though, the invention has been described in the context of a cellular radio-communication network architecture being a centralized architecture where various mobile radio-communication terminals are served by one base station, it would also be applicable in a distributed architecture where various mobile radio-communication terminals in a same coverage zone are served by a plurality of base station.

Though the invention has been described with a particular example related to the transmission of "video stream", this is not limitative as the invention may find an application for other kind of data to be transmitted in stream, for example audio, fixed frame, or any compressed stream.

The proposed method could be applied in a context of Content Centric Network, namely in the context where the cellular radio-communication network allows a user of a mobile radio-communication terminal to focus on the video needed, rather than having to reference a specific, physical location (video server) where that video is to be retrieved from.

Any reference sign in a claim should not be construed as limiting the claim. The word "comprising" does not exclude the presence of other elements than those listed in a claim. The word "a" or "an" preceding an element does not exclude the presence of a plurality of such element.

**Claims**

1. A scheduling method for data streaming in a telecommunication network infrastructure wherein a plurality of telecommunication terminals (TD1, TD2, TDN) in a same coverage zone (CL) are served by at least one serving node (BS), each telecommunication terminal (TD1, TD2, TDN) requesting a specific data content (VC1, VC2, VCN), the method comprising the following steps:

- estimating a capacity ($C_{n,j}$) of the at least one serving node (BS) with respect to each telecommunication terminal (n, TD1, TD2, TDN),

**characterized in that** the method further comprises:

- estimating a state of a plurality of data transmission buffers ($B_{n,j}$, B1, B2, BN),
- calculating at least one parameter ($QP_{n,j}$, $\alpha_{n,j}$) based on said estimated capacity ($C_{n,j}$) and said data transmission buffer state ($B_{n,j}$, B1, B2, BN) that minimize a data distortion ($D_{n,j}$) of each data stream (VS1, VS2, VSN) received by each telecommunication terminal (TD1, TD2, TDN) and maintain a number of data frames stored in each data transmission buffer ($B_{n,j}$, B1, B2, BN) at a reference number of frames ($\Delta_0$).
- transcoding or filtering each data content at an output rate ($R^S_{n,j}$) based on said parameter ($QP_{n,j}$, $\alpha_{n,j}$), and storing each transcoded or filtered data content (VC1, VC2, VCN) as data frames into each data transmission buffer ($B_{n,j}$, B1, B2, BN),
- allocating an amount of bandwidth ($W_{n,j}$) to each telecommunication terminal (n, TD1, TD2, TDN) based on said parameter ($QP_{n,j}$, $\alpha_{n,j}$), and
- scheduling and transmitting each data frames as data streams (VS1, VS2, VSN) to each telecommunication terminal (n, TD1, TD2, TDN).

2. The scheduling method of claim 1, wherein the at least one parameter is a transcoding parameter, $QP_{n,j}$, or a filtering parameter, and a bandwidth partition, $\alpha_{n,j}$.

3. The scheduling method of claim 1 or 2, wherein the method further comprises intercepting, before being transmitted by the serving node (BS), the plurality of data content (VC1, VC2, VCN) requested by the plurality of telecommunication terminal (TD1, TD2, TDN) from a plurality of data streaming server (SS1, SS2, SSN).

4. The scheduling method according to anyone of the claims 2 to 3, wherein the method further comprises the following steps:

- stopping the transmission of the data stream (VS1, VS2, VSN) to the telecommunication terminal (n, TD1, TD2, TDN) and temporarily not serving the corresponding telecommunication terminal (n, TD1, TD2, TDN) when the distortion, $D_{n,j}$, associated to said data stream (VS1, VS2, VSN) is above a minimum distortion threshold, $D_0$, and
- re-calculating the transcoding or filtering parameter, $QP_{n,j}$, and the bandwidth partition, $\alpha_{n,j}$, excluding said not served telecommunication terminal (n, TD1, TD2, $T_{DN}$).

5. The scheduling method according to anyone of the claims 2 to 4, wherein calculating the quantization parameter, and the bandwidth partition consist in solving a constrained optimization problem where a criterion dependant on a mean of the distortion is minimized based on the argument of the minimum:

$$\underset{(QP_{n,j} ; \alpha_{n,j}; n = 1 \dots N)}{\mathrm{argmin}} \sum_{n=1}^{N} D_{n,j}(QP_{n,j})$$

under the constraint that the minimum corresponds to a distortion $D_{n,j}$ at time j below the minimum distortion threshold $D_0$ on each data stream VS1, VS2, VSN:

$$D_{n,j}(QP_{n,j}) \leq D_0$$

with $QP_{n,j}$ the transcoding or filtering parameter at time j, and $\alpha_{n,j}$ the bandwidth partition at time j.

6. The scheduling method according to anyone of the claims 2 to 5, wherein the method further comprises adjusting the transcoding or filtering parameter ($QP_{n,j}$) and the bandwidth partition ($\alpha_{n,j}$) periodically according to a defined period of regulation (T).

7. The scheduling method according to anyone of the claims 1 to 6, wherein a transcoding parameter is used and a transcoding operation is implemented when the data content is a video content encoded according to a simple layer standard, H263, H264/AVC, MPEG2/4; and a filtering parameter is used and a transcoding operation is implemented when the data content is a video content encoded according to a scalable video coding standard, H264 SVC.

8. The scheduling method according to anyone of the claims 1 to 7, wherein determining the capacity ($C_{n,j}$) is based on a condition of each user-serving node link through which the data stream (VS1, VS2, VSN) is transmitted to the telecommunication terminal (TD1, TD2, TDN).

9. The scheduling method according to claim 8, wherein the capacity ($C_{n,j}$) is determined by using an indicator correlated to the capacity and provided by the serving node (BS) or each telecommunication terminal (TD1, TD2, TDN).

10. The scheduling method according to anyone of the claims 1 to 9, wherein the method further comprises estimating the distortion ($D_{n,j}$) associated to said data stream by measuring a peak signal to noise ratio (PSNR).

11. A scheduling device for data streaming in a telecommunication network infrastructure wherein a plurality of telecommunication terminal (TD1, TD2, TDN) in a same coverage zone (CL) are served by at least one serving node (BS), each telecommunication terminal (TD1, TD2, TDN) adapted to request a specific data content (VC1, VC2, VCN), **characterized in that** the scheduling device comprises:

   - a controlling arrangement (CA) adapted to calculate at least one parameter ($QP_{n,j}$, $\alpha_{n,j}$) based on an estimated capacity ($C_{n,j}$) of the at least one serving node (BS) with respect to each telecommunication terminal (n, TD1, TD2, TDN) and a state of a plurality of data transmission buffer ($B_{n,j}$, B1, B2, BN), the at least one parameter ($QP_{n,j}$, $\alpha_{n,j}$) minimizing a distortion ($D_{n,j}$) of each data stream (VS1, VS2, VSN) received by each telecommunication terminal (TD1, TD2, TDN) and maintaining a number of data frames stored in each data transmission buffer ($B_{n,j}$, B1, B2, BN) at a reference number of frames ($\Delta_0$),
   - a data transcoder (TC1, TC2, TCN) adapted to transcode or filter each data content (VC1, VC2, VCN) as data frames at a transcoder output rate ($R^S_{n,j}$) based on said parameter ($QP_{n,j}$, $\alpha_{n,j}$), each transcoded data content being stored as data frames into each data transmission buffer ($B_{n,j}$, B1, B2, BN),
   - a scheduler (MAC) adapted to allocate an amount of bandwidth ($W_{n,j}$) to each telecommunication terminal (n, TD1, TD2, TDN) based on said parameter ($QP_{n,j}$, $\alpha_{n,j}$), and to shedule the transmission of each data frames as data streams (VS1, VS2, VSN) to each telecommunication terminal (n, TD1, TD2, TDN).

12. An intelligent node of a cellular radio-communication network infrastructure wherein the serving node is a base station, and the telecommunication terminal is a mobile radio-communication terminal, the intelligent node comprising a scheduling device according to claim 11.

13. A proxy server (PX) of a cellular radio-communication network infrastructure wherein the serving node is a base station, and the telecommunication terminal is a mobile radio-communication terminal, the proxy server comprising a scheduling device according to claim 11.

**Patentansprüche**

1. Planungsverfahren für Daten-Streaming in einer Telekommunikationsnetzwerkstruktur, wobei eine Vielzahl von Telekommunikations-Endgeräten (TD1, TD2, TDN) in einem selben Abdeckungsgebiet (CL) von mindestens einem bedienenden Knoten (BS) bedient werden, wobei jedes Telekommunikations-Endgerät (TD1, TD2, TDN) einen spezifischen Dateninhalt (VC1, VC2, VCN) anfordert, wobei das Verfahren die folgenden Schritte umfasst:

   - Schätzen einer Kapazität ($C_{n,j}$) des mindestens einen bedienenden Knotens (BS) in Bezug auf jedes Telekommunikations-Endgerät (n, TD1, TD2, TDN),

   **dadurch gekennzeichnet, dass** das Verfahren weiterhin umfasst:

   - Schätzen eines Zustands einer Vielzahl von Datenübertragungspuffern ($B_{n,j}$, B1, B2, BN),

- Berechnen mindestens eines Parameters ($QP_{n,j}$, $\alpha_{n,j}$) auf der Basis der besagten geschätzten Kapazität ($C_{n,j}$) und des besagten Datenübertragungspuffer-Zustands ($B_{n,j}$, B1, B2, BN), welche eine Datenverzerrung ($D_{n,j}$) eines jeden an jedem Telekommunikations-Endgerät (TD1, TD2, TDN) empfangenen Datenstroms (VS1, VS2, VSN) minimieren und eine Anzahl von in jedem Datenübertragungspuffer ($B_{n,j}$, B1, B2, BN) gespeicherten Datenrahmen bei einer Referenzanzahl von Rahmen ($\Delta_0$) erhalten,

- Transcodieren oder Filtern jedes Dateninhalts bei einer Ausgangsrate ($RS_{n,j}$) basierend auf dem besagten Parameter ($QP_{n,j}$, $\alpha_{n,j}$), und Speichern eines jeden transcodierten oder gefilterten Dateninhalts (VC1, VC2, VCN) als Datenrahmen in jeden Datenübertragungspuffer ($B_{n,j}$, B1, B2, BN),

- Zuweisen einer Bandbreitenmenge ($W_{n,j}$) an jedes Telekommunikations-Endgerät (n, TD1, TD2, TDN) auf der Basis des besagten Parameters ($QP_{n,j}$, $\alpha_{n,j}$), und

- Planen und Übertragen eines jeden Datenrahmens als Datenströme (VS1, VS2, VSN) an jedes Telekommunikations-Endgerät (n, TD1, TD2, TDN).

2. Planungsverfahren nach Anspruch 1, wobei der mindestens eine Parameter ein Transcodierungsparameter, $QP_{n,j}$, ein Filterungsparameter oder eine Bandbreitenpartitionierung, $\alpha_{n,j}$, ist

3. Planungsverfahren nach Anspruch 1 oder 2, wobei das Verfahren weiterhin das Abfangen, vor deren Übertragung durch den bedienenden Knoten (BS), der Vielzahl von von der Vielzahl von Telekommunikations-Endgeräten (TD1, TD2, TDN) angeforderten Dateninhalten (VC1, VC2, VCN) von einer Vielzahl von Daten-Streaming-Servern (SS1, SS2, SSN) umfasst.

4. Planungsverfahren nach einem beliebigen der Ansprüche 2 bis 3, wobei das Verfahren weiterhin die folgenden Schritte umfasst:

- Unterbrechen der Übertragung des Datenstroms (VS1, VS2, VSN) an das Telekommunikations-Endgerät (n, TD1, TD2, TDN) und vorübergehendes Einstellen der Bedienung des entsprechenden Telekommunikations-Endgeräts (n, TD1, TD2, TDN), wenn die mit dem besagten Datenstrom (VS1, VS2, VSN) assoziierte Verzerrung, $D_{n,j}$, einen minimalen Verzerrungsgrenzwert, $D_0$, überschreitet, und

- erneutes Berechnen der Transcodierungs- oder Filterungsparameter $QP_{n,j}$, und der Bandbreitenpartitionierung, $\alpha_{n,j}$, unter Ausschluss des besagten nicht bedienten Telekommunikations-Endgeräts (n, TD1, TD2, TDN).

5. Planungsverfahren nach einem beliebigen der Ansprüche 2 bis 4, wobei das Berechnen des Quantisierungsparameters und der Bandbreitenpartitionierung darin besteht, ein beschränktes Optimierungsproblem zu lösen, wobei ein von einem Mittelwert der Verzerrung abhängiges Kriterium auf der Basis des Arguments des Minimums minimiert wird:

$$\operatorname*{argmin}_{(QP_{n,j}; \alpha_{n,j}; n=1\ldots N)} \sum_{n=1}^{N} D_{n,j}(QP_{n,j})$$

unter der Beschränkung, dass das Minimum einer Verzerrung $D_{n,j}$ zu einem Zeitpunkt j unter dem minimalen Verzerrungsgrenzwert $D_0$ auf jedem Datenstrom VS1, VS2, VSN entspricht:

$$D_{n,j}(QP_{n,j}) \leq D_0$$

wobei $QP_{n,j}$ den Transcodierungs- oder Filterungsparameter zum Zeitpunkt j darstellt, und $\alpha_{n,j}$ die Bandbreitenpartitionierung zum Zeitpunkt j darstellt.

6. Planungsverfahren nach einem beliebigen der Ansprüche 2 bis 5, wobei das Verfahren weiterhin das periodische Anpassen des Transcodierungs- oder Filterungsparameters ($QP_{n,j}$) und der Bandbreitenpartitionierung ($\alpha_{n,j}$) gemäß einer definierten Regelungsperiode (T) umfasst.

7. Planungsverfahren nach einem beliebigen der Ansprüche 1 bis 6, wobei ein Transcodierungsparameter verwendet und ein Transcodierungsvorgang durchgeführt wird, wenn der Dateninhalt ein gemäß einem Einschicht-Standard, H.263, H.264/AVC, MPEG2/4 codierter Videoinhalt ist; und wobei ein Filterungsparameter verwendet und ein Transcodierungsvorgang durchgeführt wird, wenn der Dateninhalt ein gemäß einem skalierbaren Videocodierungsstandard H.264 SVC codierter Videoinhalt ist.

**8.** Planungsverfahren nach einem beliebigen der Ansprüche 1 bis 7, wobei das Bestimmen der Kapazität ($C_{n,j}$) auf einem Zustand einer jeden benutzerbedienenden Knotenverbindung, über welche der Datenstrom (VS1, VS2, VSN) an das Telekommunikationsendgerät (TD1, TD2, TDN) übertragen wird, basiert.

**9.** Planungsverfahren nach Anspruch 8, wobei die Kapazität ($C_{n,j}$) unter Verwendung eines mit der Kapazität korrelierten Indikators, welcher von dem bedienenden Knoten (BS) oder von jedem Telekommunikations-Endgerät (TD1, TD2, TDN) bereitgestellt wird, bestimmt wird.

**10.** Planungsverfahren nach einem beliebigen der Ansprüche 1 bis 9, wobei das Verfahren weiterhin das Schätzen der mit dem besagten Datenstrom assoziierten Verzerrung ($D_{n,j}$) durch Messen eines Spitzen-Signal-zu-Rauschverhältnisses (PSNR) umfasst.

**11.** Planungsvorrichtung für Daten-Streaming in einer Telekommunikationsnetzwerkstruktur, wobei eine Vielzahl von Telekommunikations-Endgeräten (TD1, TD2, TDN) in einem selben Abdeckungsgebiet (CL) von mindestens einem bedienenden Knoten (BS) bedient werden, wobei jedes Telekommunikations-Endgerät (TD1, TD2, TDN) für das Anfordern eines spezifischen Dateninhalts (VC1, VC2, VCN) ausgelegt ist, wobei die Planungsvorrichtung umfasst:

- Eine Steuerungsanordnung (CA), ausgelegt für das Berechnen mindestens eines Parameters ($QP_{n,j}$, $\alpha_{n,j}$) auf der Basis einer geschätzten Kapazität ($C_{n,j}$) des mindestens einen bedienenden Knotens (BS) in Bezug auf jedes Telekommunikations-Endgerät (n, TD1, TD2, TDN), und eines Zustands einer Vielzahl von Datenübertragungspuffern ($B_{n,j}$, B1, B2, BN), wobei der mindestens eine Parameter ($QP_{n,j}$, $\alpha_{n,j}$) eine Verzerrung ($D_{n,j}$) eines jeden an jedem Telekommunikations-Endgerät (TD1, TD2, TDN) empfangenen Datenstroms (VS1, VS2, VSN) minimiert und eine Anzahl von in jedem Datenübertragungspuffer ($B_{n,j}$, B1, B2, BN) gespeicherten Datenrahmen bei einer Referenzanzahl von Rahmen ($\Delta_0$) hält,
- einen Daten-Transcoder (TC1, TC2, TCN), ausgelegt für das Transcodieren oder Filtern jedes Dateninhalts (VC1, VC2, VCN) als Datenrahmen mit einer Transcoder-Ausgangsrate ($R^s_{n,j}$) auf der Basis des besagten Parameters ($QP_{n,j}$, $\alpha_{n,j}$), wobei jeder transcodierter Dateninhalt als Datenrahmen in jeden Datenübertragungspuffer ($B_{n,j}$, B1, B2, BN) gespeichert wird,
- einen Scheduler (MAC), ausgelegt für das Zuweisen einer Bandbreitenmenge ($W_{n,j}$) an jedes Telekommunikations-Endgerät (n, TD1 TD2, TDN) auf der Basis des besagten Parameters ($QP_{n,j}$, $\alpha_{n,j}$), und für das Planen der Übertragung eines jeden Datenrahmens als Datenströme (VS1, VS2, VSN) an jedes Telekommunikations-Endgerät (n, TD1, TD2, TDN).

**12.** Intelligenter Knoten einer zellularen Funkkommunikationsnetzwerk-Infrastruktur, wobei der bedienende Knoten eine Basisstation und das Telekommunikations-Endgerät ein mobiles Funkkommunikations-Endgerät ist, wobei der intelligente Knoten eine Planungsvorrichtung gemäß Anspruch 11 umfasst.

**13.** Proxy-Server (PX) einer zellularen Funkkommunikationsnetzwerk-Infrastruktur, wobei der bedienende Knoten eine Basisstation und das Telekommunikations-Endgerät ein mobiles Funkkommunikations-Endgerät ist, wobei der Proxy-Server eine Planungsvorrichtung gemäß Anspruch 11 umfasst.

## Revendications

**1.** Procédé de planification pour la transmission de données en continu dans une infrastructure de réseau de télécommunication dans lequel une pluralité de terminaux de télécommunication (TD1, TD2, TDN) dans une même zone de couverture (CL) est desservie par au moins un noeud de desserte (BS), chaque terminal de télécommunication (TD1, TD2, TDN) demandant un contenu de données spécifique (VC1, VC2, VCN), le procédé comprenant les étapes suivantes :

- estimer une capacité ($C_{n,j}$) de l'au moins un noeud de desserte (BS) par rapport à chaque terminal de télécommunication (n, TD1, TD2, TDN),

**caractérisé en ce que** le procédé comprend en outre les étapes suivantes :

- estimer un état d'une pluralité de tampons de transmission de données ($B_{n,j}$, B1, B2, BN),
- calculer au moins un paramètre ($QP_{n,j}$, $\alpha_{n,j}$) sur la base de ladite capacité estimée ($C_{n,j}$) et dudit état des tampons de transmission de données ($B_{n,j}$, B1, B2, BN) qui réduit au minimum une distorsion de données ($D_{n,j}$) de chaque flux de données (VS1, VS2, VSN) reçu par chaque terminal de télécommunication (TD1, TD2, TDN) et qui maintient un nombre de trames de données stockées dans chaque tampon de transmission de données ($B_{n,j}$, B1, B2, BN) à un nombre de trames de référence ($\Delta_0$),
- transcoder ou filtrer chaque contenu de données à un débit de sortie ($R^s_{n,j}$) sur la base dudit paramètre ($QP_{n,j}$, $\alpha_{n,j}$), et stocker chaque contenu de données transcodé ou filtré (VC1, VC2, VCN) sous forme de trames de données dans chaque tampon de transmission de données ($B_{n,j}$, B1, B2, BN),
- attribuer une quantité de bande passante ($W_{n,j}$) à chaque terminal de télécommunication (n, TD1, TD2, TDN) sur la base dudit paramètre ($QP_{n,j}$, $\alpha_{n,j}$), et
- planifier et transmettre chaque trame de données sous forme de flux de données (VS1, VS2, VSN) vers chaque terminal de télécommunication (n, TD1, TD2, TDN).

2. Procédé de planification selon la revendication 1, dans lequel l'au moins un paramètre est un paramètre de transcodage, $QP_{n,j}$, ou un paramètre de filtrage, et une partition de bande passante, $\alpha_{n,j}$.

3. Procédé de planification selon la revendication 1 ou 2, le procédé comprenant en outre l'interception, avant d'être transmis par le noeud de desserte (BS), de la pluralité de contenus de données (VC1, VC2, VCN) demandés par la pluralité de terminaux de télécommunication (TD1, TD2, TDN) à partir d'une pluralité de serveurs de transmission de données en continu (SS1, SS2, SSN).

4. Procédé de planification selon l'une quelconque des revendications 2 et 3, le procédé comprenant en outre les étapes suivantes :

- arrêter la transmission du flux de données (VS1, VS2, VSN) vers le terminal de télécommunication (n, TD1, TD2, TDN) et ne pas desservir temporairement le terminal de télécommunication correspondant (n, TD1, TD2, TDN) lorsque la distorsion, $D_{n,j}$, associée audit flux de données (VS1, VS2, VSN) est supérieure à un seuil de distorsion minimum, $D_0$, et
- recalculer le paramètre de transcodage ou de filtrage, $QP_{n,j}$, et la partition de bande passante, $\alpha_{n,j}$, en excluant ledit terminal de télécommunication non desservi (n, TD1, TD2, TDN).

5. Procédé de planification selon l'une quelconque des revendications 2 à 4, dans lequel le calcul du paramètre de quantification et de la partition de bande passante consiste à résoudre un problème d'optimisation contrainte où un critère dépendant d'une moyenne de la distorsion est réduit au minimum sur la base de l'argument du minimum :

$$\operatorname*{argmin}_{(QP_{n,j}; \alpha_{n,j}; n = 1 \ldots N)} \sum_{n=1}^{N} D_{n,j}(QP_{n,j})$$

à condition que le minimum corresponde à une distorsion $D_{n,j}$ au moment j en dessous du seuil de distorsion minimum $D_0$ sur chaque flux de données VS1, VS2, VSN :

$$D_{n,j}(QP_{n,j}) \leq D_0$$

$QP_{n,j}$ étant le paramètre de transcodage ou de filtrage au moment j, et $\alpha_{n,j}$ étant la partition de bande passante au moment j.

6. Procédé de planification selon l'une quelconque des revendications 2 à 5, le procédé comprenant en outre le réglage périodique du paramètre de transcodage ou de filtrage ($QP_{n,j}$) et de la partition de bande passante ($\alpha_{n,j}$) conformément à une période de réglage définie (T).

7. Procédé de planification selon l'une quelconque des revendications 1 à 6, dans lequel un paramètre de transcodage est utilisé et une opération de transcodage est mise en oeuvre lorsque le contenu de données est un contenu vidéo codé conformément à une norme de couche simple, H263, H264/AVC, MPEG2/4 ; et un paramètre de filtrage est utilisé et une opération de transcodage est mise en oeuvre lorsque le contenu de données est un contenu vidéo codé conformément à une norme de codage vidéo extensible, H264 SVC.

8. Procédé de planification selon l'une quelconque des revendications 1 à 7, dans lequel la détermination de la capacité ($C_{n,j}$) est basée sur un état de chaque liaison de noeud de desserte d'utilisateur à travers laquelle le flux de données (VS1, VS2, VSN) est transmis au terminal de télécommunication (TD1, TD2, TDN).

9. Procédé de planification selon la revendication 8, dans lequel la capacité ($C_{n,j}$) est déterminée en utilisant un indicateur lié à la capacité et fourni par le noeud de desserte (BS) ou chaque terminal de télécommunication (TD1, TD2, TDN).

10. Procédé de planification selon l'une quelconque des revendications 1 à 9, le procédé comprenant en outre l'estimation de la distorsion ($D_{n,j}$) associée audit flux de données en mesurant un rapport signal sur bruit maximum (PSNR).

11. Dispositif de planification pour la transmission de données en continu dans une infrastructure de réseau de télécommunication dans lequel une pluralité de terminaux de télécommunication (TD1, TD2, TDN) dans une même zone de couverture (CL) est desservie par au moins un noeud de desserte (BS), chaque terminal de télécommunication (TD1, TD2, TDN) étant adapté pour demander un contenu de données spécifique (VC1, VC2, VCN), **caractérisé en ce que** le dispositif de planification comprend :

- un dispositif de contrôle (CA) adapté pour calculer au moins un paramètre ($QP_{n,j}$, $\alpha_{n,j}$) sur la base d'une capacité estimée ($C_{n,j}$) de l'au moins un noeud de desserte (BS) par rapport à chaque terminal de communication (n, TD1, TD2, TDN) et d'un état d'une pluralité de tampons de transmission de données ($B_{n,j}$, B1, B2, BN), l'au moins un paramètre ($QP_{n,j}$, $\alpha_{n,j}$) réduisant au minimum une distorsion ($D_{n,j}$) de chaque flux de données (VS1, VS2, VSN) reçu par chaque terminal de télécommunication (TD1, TD2, TDN) et maintenant un nombre de trames de données stockées dans chaque tampon de transmission de données ($B_{n,j}$, B1, B2, BN) à un nombre de trames de référence ($\Delta_o$),
- un transcodeur de données (TC1, TC2, TCN), adapté pour transcoder ou filtrer chaque contenu de données (VC1, VC2, VCN) sous forme de trames de données à un débit de sortie du transcodeur ($R^s_{n,j}$) sur la base dudit paramètre ($QP_{n,j}$, $\alpha_{n,j}$), chaque contenu de données transcodé étant stocké sous forme de trames de données dans chaque tampon de transmission de données ($B_{n,j}$, B1, B2, BN),
- un dispositif de planification (MAC), adapté pour attribuer une quantité de bande passante ($W_{n,j}$) à chaque terminal de télécommunication (n, TD1, TD2, TDN) sur la base dudit paramètre ($QP_{n,j}$, $\alpha_{n,j}$), et pour planifier la transmission de chaque trame de données sous forme de flux de données (VS1, VS2, VSN) vers chaque terminal de télécommunication (n, TD1, TD2, TDN).

12. Noeud intelligent d'une infrastructure de réseau de radiocommunication cellulaire dans lequel le noeud de desserte est une station de base, et le terminal de télécommunication est un terminal de radiocommunication mobile, le noeud intelligent comprenant un dispositif de planification selon la revendication 11.

13. Serveur mandataire (PX) d'une infrastructure de réseau de radiocommunication cellulaire dans lequel le noeud de desserte est une station de base, et le terminal de télécommunication est un terminal de radiocommunication mobile, le serveur mandataire comprenant un dispositif de planification selon la revendication 11.

**FIG. 1**

**FIG. 2**

**FIG. 3**

18

C [bit/s/Hz]

**FIG. 4**

α

**FIG. 5**

R$^U$ [bit/s]

**FIG. 6**

PSNR [dB]

| | TD1 |
| --- | --- |
| | TD2 |
| | TD3 |
| | LIM |

**FIG. 7**

C [bit/s/Hz]

**FIG. 8**

α

**FIG. 9**

$R^U$ [bit/s]

**FIG. 10**

PSNR [dB]

**FIG. 11**

| | |
|---|---|
| ——————— | TD1 |
| - - - - - - - | TD2 |
| ·—·—·— | TD3 |
| —··—··— | LIM |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003031210 A